# EUROPÄISCHE PATENTANMELDUNG

(11) **EP 1 383 026 A1**
(43) Veröffentlichungstag der Anmeldung: **21.01.2004**
(21) Anmeldenummer: 02405510.5
(22) Anmeldetag: 19.06.2002
(51) Int. Cl.: G06F 1/16, G06F 3/02

(54) **Mobile tragbare elektronische Vorrichtung und Erweiterungsmodul für mobile tragbare elektronische Vorrichtungen**

(71) Anmelder: Swisscom AG, 3000 Bern 29 (CH)
(72) Erfinder: Riordan, John, 3006 Bern (CH)
(74) Vertreter: BOVARD AG - Patentanwälte

(57) **Zusammenfassung**

Es wird eine mobile tragbare elektronische Vorrichtung (1) vorgeschlagen, welche eine auf einer Anzeigeseite (10) der Vorrichtung (1) angebrachte Anzeige (12) und zwei transparente Griffe (11L, 11R) umfasst, die entlang den beiden seitlich zur vertikalen Achse (Z) der Anzeige (12) verlaufenden Längsseiten (16L, 16R) der Vorrichtung (1) angeordnet sind. Auf der von der Anzeigeseite (10) abgewandten Rückseite (17L, 17R) der Griffe (11L, 11R) sind Bedienungselemente (L1, L2, L3, L4, R1, R2, R3, R4) für die manuelle Dateneingabe so angeordnet, dass im Zustand, in welchem die Griffe (11L, 11R) durch den Benutzer jeweils zwischen dem Daumen (T) und den anderen Fingern (F) einer Hand gehalten werden, diese anderen Finger (F) jeweils auf eines der Bedienungselemente (L1, L2, L3, L4, R1, R2, R3, R4) zu liegen kommen und die Bedienungselemente (L1, L2, L3, L4, R1, R2, R3, R4) jeweils durch den daraufliegenden Finger (F) betätigbar sind. Zusätzlich zur Anzeige (12) umfasst die Vorrichtung (1) weitere optische Anzeigeelemente (L11, L22, L33, L44, R11, R22, R33, R44) zur Darstellung von Zeichen, die jeweils einem der Bedienungselemente (L1, L2, L3, L4, R1, R2, R3, R4) zugeordnet auf der Anzeigeseite (10) angebracht sind. Durch Betätigen eines ersten Bedienungselementes (L2) wird eine Zeichengruppe bestimmt und durch Betätigen eines zweiten Bedienungselementes (R1, R2, R3, R4) wird ein Zeichen aus der bestimmten Zeichengruppe ausgewählt.

## Beschreibung

### Technisches Gebiet

Die vorliegende Erfindung betrifft eine mobile tragbare elektronische Vorrichtung und ein Erweiterungsmodul für mobile tragbare elektronische Vorrichtungen. Die Erfindung betrifft insbesondere eine mobile tragbare elektronische Vorrichtung, welche eine auf einer Anzeigeseite der Vorrichtung angebrachte Anzeige umfasst und welche Bedienungselemente für die manuelle Dateneingabe durch einen Benutzer umfasst, die auf einer von der Anzeigeseite abgewandten Rückseite der Vorrichtung angeordnet sind, sowie ein Erweiterungsmodul zur entfernbaren Verbindung mit einer mobilen tragbaren elektronischen Vorrichtung.

### Stand der Technik

Mobile tragbare elektronische Vorrichtungen wie Mobilfunktelefone, PDA-Computer (Personal Digital Assistant) oder computerisierte Spielvorrichtungen sind bekannt und erfreuen sich dank der fortschreitenden Miniaturisierung elektronischer Komponenten, der Vergrösserung der Speicherkapazität von Datenspeichern und der Erhöhung der Leistung von Prozessoren immer grösserer Beliebtheit. Diese mobilen tragbaren elektronischen Vorrichtungen umfassen eine Anzeige zur Darstellung von Daten wie grafische, textuelle und numerische Informationen, sowie Bedienungselemente für die manuelle Dateneingabe, insbesondere für die Eingabe von Datenzeichen wie Zahlenzeichen und Zeichen und Steuerzeichen. Typischerweise ist die Anzahl der Bedienungselemente viel kleiner als bei einer herkömmlichen Tastatur für einen Personal Computer, beispielsweise umfasst ein Mobilfunktelefon typischerweise bloss 12 Tasten für die Dateneingabe, und jedes Bedienungselement ist mit mehreren Zeichen belegt, so dass es für die Eingabe eines gewünschten Zeichens mehrfach betätigt werden muss. Typischerweise sind die Bedienungselemente dieser reduzierten Tastaturen auf der gleichen Seite der mobilen tragbaren elektronischen Vorrichtung angebracht wie die Anzeige, so dass die Vorrichtung vom Benutzer ein- oder zweihändig zwischen dem Daumen und den anderen Fingern gehalten werden kann und die Bedienungselemente mit dem/den Daumen betätigt werden können. Diese Anordnung der Bedienungselemente hat allerdings den Nachteil, dass sie eine Reduktion der Anzeigengrösse zur Folge hat und dass die Daumen ständig zwischen den einzelnen Bedienungselementen verschoben werden müssen.

In der Patentschrift US 6,297,752 wird eine mobile tragbare elektronische Vorrichtung beschrieben, deren Bedienungselemente für die manuelle Dateneingabe in Form einer Tastatur auf der von der Anzeigeseite abgewandten Rückseite der Vorrichtung angeordnet sind. Gemäss US 6,297,752 umfasst die auf der Rückseite der mobilen tragbaren elektronischen Vorrichtung angeordnete Tastatur Bedienungselemente für sämtliche lateinischen Buchstaben und arabischen Zahlen, ohne dass Mehrfachbelegungen nötig sind. Um einem Benutzer die Betätigung der auf der Rückseite angebrachten Bedienungselemente zu erleichtern, werden die einzelnen Bedienungselemente mit den ihnen zugeordneten Schrift- und Zahlenzeichen auf der Anzeige entsprechend ihrer rückseitigen Anordnung grafisch wiedergegeben. Dies hat allerdings den Nachteil, dass die Anzeige in diesem Zustand nicht für die Darstellung anderer Informationen, insbesondere für die Wiedergabe eingegebener Daten, verfügbar ist.

### Darstellung der Erfindung

Es ist eine Aufgabe der vorliegenden Erfindung, eine neue mobile tragbare elektronische Vorrichtung mit einer Anzeige und mit von der Anzeigeseite abgewandten, rückseitig angeordneten Bedienungselementen für die manuelle Dateneingabe sowie ein Erweiterungsmodul zur entfernbaren Verbindung mit einer mobilen tragbaren elektronischen Vorrichtung vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die mobile tragbare elektronische Vorrichtung umfasst eine Anzeige, die auf der als Anzeigeseite bezeichneten Seite der Vorrichtung angebracht ist, sowie Bedienungselemente für die manuelle Dateneingabe durch einen Benutzer der Vorrichtung, die auf einer von der Anzeigeseite abgewandten Rückseite der Vorrichtung angeordnet sind.

Die oben genannten Ziele werden durch die vorliegende Erfindung insbesondere dadurch erreicht, dass die mobile tragbare elektronische Vorrichtung mit zwei Griffen versehen ist, die entlang den beiden seitlich zur vertikalen Achse der Anzeige verlaufenden Längsseiten der Vorrichtung angeordnet sind, und dass die Bedienungselemente so auf der von der Anzeigeseite abgewandten Rückseite der Griffe angeordnet sind, dass im Zustand, in welchem die Griffe durch den Benutzer jeweils zwischen dem Daumen und den anderen Fingern einer Hand gehalten werden, diese anderen Finger jeweils auf eines der Bedienungselemente zu liegen kommen und die Bedienungselemente jeweils durch den daraufliegenden Finger betätigbar sind. Die Anordnung der Bedienungselemente auf seitlich angeordneten Griffen hat den Vorteil, dass die Anzeigegrösse nicht durch Bedienungselemente eingeschränkt wird. Weil die Finger auf der Rückseite der Griffe jeweils auf eines der Bedienungselemente zu liegen kommen, muss der Benutzer die Finger nicht zwischen Bedienungselementen verschieben und benötigt keine weiteren Orientierungshilfen zur Positionierung der Finger, so dass die Anordnung der rückseitig angeordneten Bedienungselemente nicht auf der Anzeige dargestellt werden muss.

Die oben genannten Ziele werden durch die vorliegende Erfindung überdies dadurch erreicht, dass ein Erweiterungsmodul zur entfernbaren Verbindung mit einer mobilen tragbaren elektronischen Vorrichtung, die eine auf einer Anzeigeseite der Vorrichtung angebrachte Anzeige umfasst, Bedienungselemente für die manuelle Dateneingabe durch einen Benutzer umfasst, welche im mit der mobilen tragbaren elektronischen Vorrichtung verbundenen Zustand auf einer von der Anzeigeseite abgewandten Rückseite des Erweiterungsmoduls angeordnet sind, wobei das Erweiterungsmodul mit zwei Griffen versehen ist, die im mit der mobilen tragbaren elektronischen Vorrichtung verbundenen Zustand entlang den beiden seitlich zur vertikalen Achse der Anzeige verlaufenden Längsseiten der Vorrichtung angeordnet sind, und wobei die Bedienungselemente so auf der von der Anzeigeseite abgewandten Rückseite der Griffe angeordnet sind, dass im Zustand, in welchem die Griffe durch den Benutzer jeweils zwischen dem Daumen und den anderen Fingern einer Hand gehalten werden, diese anderen Finger jeweils auf eines der Bedienungselemente zu liegen kommen und die Bedienungselemente jeweils durch den daraufliegenden Finger betätigbar sind.

Vorzugsweise umfasst die mobile tragbare elektronische Vorrichtung, respektive das Erweiterungsmodul, zusätzlich zur Anzeige weitere optische Anzeigeelemente zur Darstellung von Zeichen, welche jeweils einem der Bedienungselemente zugeordnet auf der Anzeigeseite angebracht sind. Durch Verwendung von optischen Anzeigeelementen zur Darstellung der den Bedienungselementen zugeordneten Zeichen kann dem Benutzer selbst eine dynamische Zuordnung von Zeichen zu Bedienungselementen klar dargestellt werden.

Vorzugsweise sind die Griffe aus transparentem Material gefertigt, so dass die zur Betätigung der Bedienungselemente verwendeten Finger des Benutzers für den Benutzer von der Anzeigeseite her durch die Griffe hindurch sichtbar sind. Dadurch wird dem Benutzer die Positionierung der Finger auf den rückseitig angeordneten Bedienungselementen zusätzlich erleichtert und es kann selbst auf Strukturelemente, die auf der Rückseite der Griffe als Positionierungshilfe dienen, verzichtet werden.

Vorzugsweise umfasst die mobile tragbare elektronische Vorrichtung, respektive das Erweiterungsmodul, Mittel zum Zuweisen von Zeichen zu Bedienungselementen und zum Ansteuern der optischen Anzeigeelemente mit jeweils demjenigen Zeichen, das dem dem betreffenden Anzeigelement zugeordneten Bedienungselement zugewiesen ist. Dies ermöglicht, den Bedienungselementen dynamisch verschiedene Zeichensätze und/oder Zeichen zuzuordnen und dem Benutzer anzuzeigen.

In einer Ausführungsvariante sind die oben beschriebenen Mittel so beschaffen, dass sie einem der Bedienungselemente ein Zeichen in Abhängigkeit von der Betätigung eines anderen der Bedienungselemente zuweisen. Durch diese von betätigten Bedienungselementen abhängige Zuweisung von Zeichen zu Bedienungselementen ist es möglich, Bedienungselemente während der Dateneingabe dynamisch mit Zeichen zu belegen.

In einer Ausführungsvariante umfasst die mobile tragbare elektronische Vorrichtung, respektive das Erweiterungsmodul, ein auf der Anzeigeseite angebrachtes, durch die Daumen betätigbares Selektionselement, und die oben beschriebenen Mittel sind so beschaffen, dass sie den Bedienungselementen Zeichen in Abhängigkeit von der Betätigung des Selektionselements zuweist. Mittels des Selektionselements können so verschiedene Zeichensätze, beispielsweise das lateinische Alphabet, gewählt und den Bedienungselementen zugewiesen werden.

Vorzugsweise umfasst die mobile tragbare elektronische Vorrichtung, respektive das Erweiterungsmodul, weitere Mittel zum Bestimmen einer Zeichengruppe, die einem ersten betätigten Bedienungselement zugewiesen ist, zum Bestimmen einer Elementidentifizierung eines betätigten zweiten Bedienungselements, und zum Bestimmen eines Zeichens aus der bestimmten Zeichengruppe, basierend auf der Elementidentifizierung des betätigten zweiten Bedienungselements. Dadurch kann ein Zeichen bei einer Zuordnung einer Gruppe von mehreren Zeichen zu einem Bedienungselement durch sequentielle Betätigung von zwei Bedienungselementen ausgewählt und auf der Anzeige dargestellt werden.

In einer Ausführungsvariante sind die oben beschriebenen weiteren Mittel so beschaffen, dass das Zeichen nur aus der bestimmten Zeichengruppe bestimmt wird, wenn das betätigte erste Bedienungselement und das betätigte zweite Bedienungselement auf verschiedenen Griffen angeordnet sind. Dadurch wird die oben erwähnte sequentielle Betätigung von zwei Bedienungselementen auf die beiden Griffe aufgeteilt, das heisst zunächst wird eine Zeichengruppe durch Betätigen eines Bedienungselements auf dem linken Griff (respektive auf dem rechten Griff) gewählt und darauf folgend das gewünschte Zeichen in der gewählten Zeichengruppe durch Betätigen eines Bedienungselements auf dem gegenüberliegenden rechten Griff (respektive auf dem gegenüberliegenden linken Griff) bestimmt. Diese Aufteilung ergibt ein konsistentes Eingabemuster, in welchem ein Zeichen durch eine Sequenz einer linksseitigen und einer rechtsseitigen Betätigung oder durch eine Sequenz einer rechtsseitigen und einer linksseitigen Betätigung eines Bedienungselements gewählt und eingegeben wird, das von Benutzern schnell erlernt werden kann.

In einer Ausführungsvariante sind die Griffe als Platten ausgestaltet, die zwischen einem an den Längsseiten der Vorrichtung anliegenden Zustand, in welchem die Bedienungselemente nicht betätigbar sind, und einem für die Betätigung der Bedienungselemente vorgesehenen, vorstehenden Zustand bewegbar sind. Dadurch, dass die Griffe in einen an den Längsseiten der Vorrichtung anliegenden Zustand weggeklappt werden können, kann die mobile tragbare elektronische Vorrichtung bei Nichtgebrauch Platz sparender aufbewahrt werden.

In verschiedenen Ausführungsvarianten sind jeweils vier Bedienungselemente auf der Rückseite eines Griffs angeordnet, sind die Bedienungselemente als Berührungssensoren, Drucksensoren oder Druckschalter ausgeführt, sind die optischen Anzeigeelemente jeweils im Bereich über dem Bedienungselement, dem sie zugeordnet sind, auf der Anzeigeseite der Griffe angebracht, sind die optischen Anzeigeelemente als LCD- oder LED-Anzeigen ausgeführt, und ist die Vorrichtung als Mobilfunktelefon, als PDA-Computer und/oder als computerisierte Spielvorrichtung ausgeführt.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt eine schematische Draufsicht auf die mobile tragbare elektronische Vorrichtung im Zustand, in welchem die Griffe der Vorrichtung durch den Benutzer jeweils zwischen dem Daumen und den anderen Fingern einer Hand gehalten werden.
Figur 2 zeigt einen Querschnitt der mobilen tragbaren elektronischen Vorrichtung.
Figur 3 zeigt ein Flussdiagramm, welches eine Sequenz von Betätigungen von Bedienungselementen und die resultierende Darstellung von Zeichen auf Anzeigelementen, die diesen Bedienungselementen zugeordnet sind, illustriert.
Figur 4 zeigt eine schematische Draufsicht auf das Erweiterungsmodul im Zustand, in welchem das Erweiterungsmodul mit einer mobilen tragbaren elektronischen Vorrichtung verbunden ist und in welchem die Griffe der Vorrichtung durch den Benutzer jeweils zwischen dem Daumen und den anderen Fingern einer Hand gehalten werden.
Figur 5 zeigt einen Querschnitt des Erweiterungsmoduls im Zustand, in welchem das Erweiterungsmodul mit einer mobilen tragbaren elektronischen Vorrichtung verbunden ist.
Figur 6 zeigt einen Längsschnitt des Erweiterungsmoduls im Zustand, in welchem das Erweiterungsmodul mit einer mobilen tragbaren elektronischen Vorrichtung verbunden ist.

### Wege zur Ausführung der Erfindung

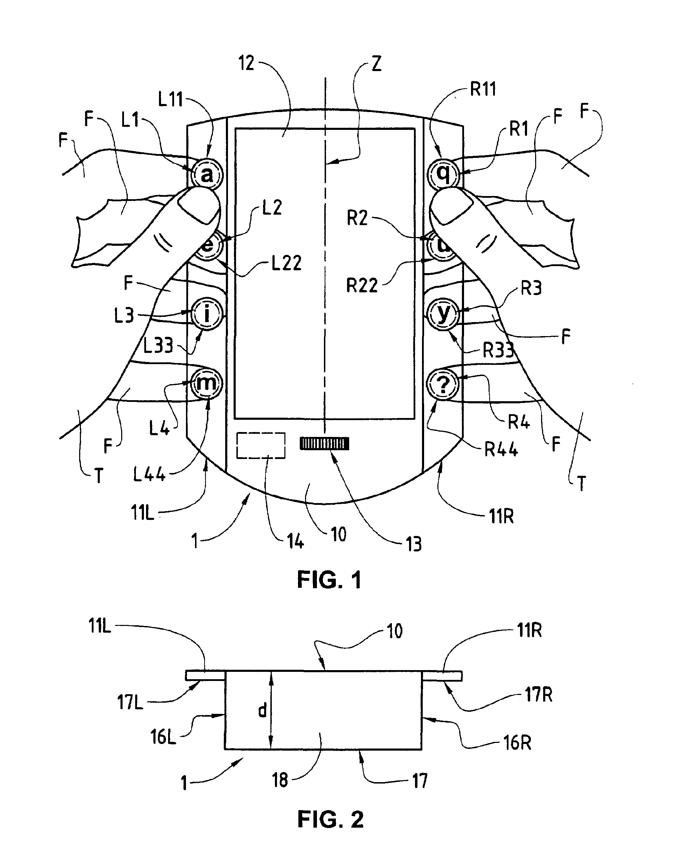

In den Figuren 1, 2, 4, 5 und 6 werden einander entsprechende, gleiche Komponenten durch gleiche Bezugszeichen bezeichnet.

In den Figuren 1, 2, 4, 5 und 6 bezeichnen die Bezugszeichen 1 und 1' eine mobile tragbare elektronische Vorrichtung, beispielsweise ein Mobilfunktelefon, einen PDA-Computer, eine computerisierte Spielvorrichtung oder eine Kombination dieser Geräte. Die Vorrichtung 1, 1' umfasst ein Gehäuse, eine Anzeige 12, eine elektrische Energiequelle, einen Prozessor sowie einen Speicher zur Speicherung von Daten und Programmen.

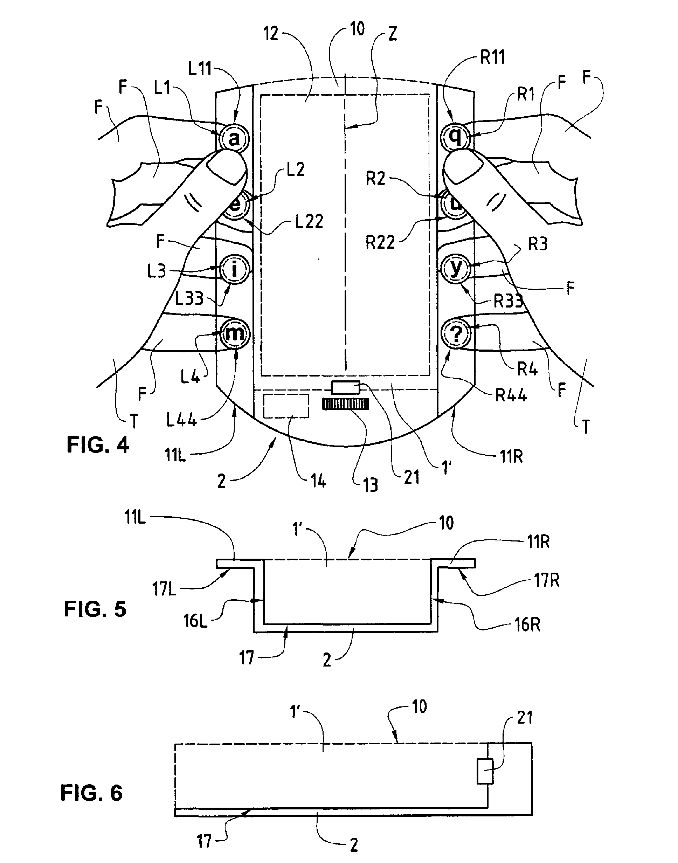

Die Seite der Vorrichtung 1, 1', auf der die Anzeige 12 angeordnet ist, wird nachfolgend als Anzeigeseite 10 bezeichnet. Die Seiten der Vorrichtung 1, 1', die seitlich zur vertikalen Achse Z der Anzeige 12 verlaufen, werden nachfolgend als Längsseiten 16L (links) und 16R (rechts) bezeichnet. In der in Figur 1, respektive Figur 4, dargestellten Ausführung verlaufen die Längsseiten 16, 16R parallel zur Anzeigeachse Z. Die von der Anzeigeseite 10 abgewandte Seite der Vorrichtung 1, 1' wird nachfolgend als Rückseite 17 bezeichnet.

In den Figuren 4, 5 und 6 bezeichnet das Bezugszeichen 2 ein Erweiterungsmodul, das entfernbar mit der Vorrichtung 1' verbunden werden kann. Das Erweiterungsmodul 2 wird einerseits mit der Vorrichtung 1' mechanisch verbunden und andererseits mit der Vorrichtung 1' über das Schnittstellenmodul 21 für den Datenaustausch verbunden. Bei der mechanischen Verbindung des Erweiterungsmoduls 2 mit der Vorrichtung 1' wird die Vorrichtung 1' durch das Erweiterungsmodul 2 vorzugsweise so geführt, dass eine kontaktbehaftete Verbindung des Schnittstellenmoduls 21 des Erweiterungsmoduls 2 mit Kontaktelementen der Vorrichtung 1' erreicht wird. Das Erweiterungsmodul 2 umfasst ein Gehäuse, eine Anzeige 12, einen Prozessor sowie einen Speicher zur Speicherung von Daten und Programmen. Das Erweiterungsmodul 2 umfasst entweder eine Energiequelle (Batterie) oder wird über die kontaktbehaftete Verbindung durch die Vorrichtung 1' elektrisch gespeist. Wie in den Figuren 1, 2 und 3 schematisch dargestellt wird, ist das Erweiterungsmodul 2 so ausgestaltet, dass es einen Aufnahmeschacht bildet, in welchen die Vorrichtung 1' eingeschoben werden kann. Der Fachmann wird verstehen, dass auch andere entfernbare mechanische Verbindungen des Erweiterungsmoduls 2 mit der Vorrichtung 1' möglich sind. Das Erweiterungsmodul 2 kann beispielsweise auf die Vorrichtung 1' aufgeschnappt werden.

Die Vorrichtung 1, respektive das Erweiterungsmodul 2, umfasst zwei Griffe 11L und 11 R, die entlang den Längsseiten 16L beziehungsweise 16R angeordnet sind. Die von der Anzeigeseite 10 abgewandten Seiten der Griffe 11 L und 11R werden nachfolgend als Rückseiten 17L und 17R bezeichnet. Die Griffe 11 L und 11 R sind vorzugsweise plattenförmig ausgestaltet. Die Griffe 11 L und 11 R der Vorrichtung 1 sind vorzugsweise mit einem Gelenkmechanismus beweglich an den Längsseiten 16L und 16R angebracht, so dass sie von einem Benutzer zwischen zwei Positionen hin und her bewegt werden können. In einem ersten ausgeklappten Zustand, der in der Figur 2 dargestellt ist, sind die Griffe 11L und 11R vorstehend (das heisst sie erstrecken sich an den Längsseiten 16L und 16R aus der Vorrichtung 1 heraus) und erstrecken sich entlang der Längsseiten 16L und 16R. In diesem ausgeklappten Zustand ermöglichen die Griffe 11L und 11R dem Benutzer die Vorrichtung 1 zu halten, indem der Benutzer die Griffe 11 L und 11 R beidhändig jeweils zwischen dem Daumen T und den anderen Fingern F einer Hand hält, wie in der Figur 1 dargestellt ist. Durch Positionieren der Finger F auf den Rückseiten 17L, 17R und der Daumen T auf der Anzeigeseite 10 der Griffe 11 L, 11 R übt der Benutzer einen bequemen Haltegriff aus, währenddem er die Anzeige 12 betrachten kann. Im zweiten Zustand liegen die Griffe 11L, 11R an den Längsseiten 16L, 16R an. In einer alternativen Ausführungsvariante sind die Griffe 11L, 11 R fest mit dem Körper 18 der Vorrichtung 1 verbunden und weisen dieselbe Dicke d wie die Vorrichtung 1 auf.

Die Griffe 11L, 11R sind vorzugsweise aus transparentem Material gefertigt, so dass die zur Betätigung der Bedienungselemente L1, L2, L3, L4, R1, R2, R3, R4 verwendeten Finger F des Benutzers für den Benutzer von der Anzeigeseite 10 her durch die Griffe 11L, 11R hindurch sichtbar sind.

Wie in der Figur 1 dargestellt ist, umfasst die Vorrichtung 1, respektive das Erweiterungsmodul 2, Bedienungselemente L1, L2, L3, L4 und R1, R2, R3, R4, die auf den Rückseiten 17L beziehungsweise 17R der Griffe 11L und 11R angebracht sind. Die Bedienungselemente L1, L2, L3, L4, R1, R2, R3, R4 sind so angeordnet, dass die Finger F im oben beschriebenen Haltegriff jeweils auf eines der Bedienungselemente L1, L2, L3, L4, R1, R2, R3, R4 zu liegen kommen und das betreffende Bedienungselement L1, L2, L3, L4, R1, R2, R3, R4 betätigen können, ohne dass dabei die Finger F zwischen den einzelnen Bedienungselementen L1, L2, L3, L4, R1, R2, R3, R4 verschoben werden müssen. Die Bedienungselemente L1, L2, L3, L4, R1, R2, R3, R4 sind als Berührungssensoren, Drucksensoren oder Druckschalter ausgeführt. Während die Betätigung eines Drucksensors oder eines Druckschalters durch erhöhte Kraftausübung im betreffenden Finger F erfolgt, erfolgt die Betätigung eines Berührungssensors vorzugsweise durch kurzzeitiges, leichtes Abheben des betreffenden Fingers F.

Wie in der Figur 1 dargestellt ist, umfasst die Vorrichtung 1, respektive das Erweiterungsmodul 2, weitere optische Anzeigeelemente L11, L22, L33, L44 und R11, R22, R33, R44 zur Darstellung von Zeichen, die auf der Anzeigeseite 10 der Griffe 11L und 11R angebracht sind. Die Zeichen umfassen insbesondere Schriftzeichen, Zahlenzeichen und Spezialzeichen; sie können aber auch Steuerzeichen umfassen. Die Anzeigeelemente L11, L22, L33, L44, R11, R22, R33, R44 sind, insbesondere auch durch ihre geometrische Anordnung, jeweils einem Bedienungselement L1, L2, L3, L4, R1, R2, R3, R4 zugeordnet. Vorzugsweise sind die Anzeigeelemente L11, L22, L33, L44, R11, R22, R33, R44 jeweils im Bereich über dem Bedienungselement L1, L2, L3, L4, R1, R2, R3, R4 angeordnet, dem sie zugeordnet sind, wie in der Figur 1 dargestellt ist. Die Anzeigeelemente L11, L22, L33, L44, R11, R22, R33, R44 sind als LCD-(Liquid Crystal Display) oder LED-Anzeigen (Light Emitting Diode) ausgeführt.

**Tabelle 1**

| Bedienungselement | Zeichengruppe |
|---|---|
| L1 | { a b c d } |
| L2 | {efgh} |
| L3 | { i j k l } |
| L4 | { m n o p } |
| R1 | { q r s t } |
| R2 | { u v w x } |
| R3 | { y z . , } |
| R4 | { ? @ SPACE DEL } |

In der Vorrichtung 1, respektive im Erweiterungsmodul 2, sind jedem der Bedienungselemente L1, L2, L3, L4, R1, R2, R3, R4 jeweils eine Zeichengruppe zugeordnet, die aus einer Sequenz von mehreren (vier) Zeichen eines Zeichensatzes besteht. Diese Zuordnung erfolgt beispielsweise mittels einer gespeicherten Tabelle. In der Tabelle 1 ist eine mögliche Zuordnung des lateinischen Zeichensatzes (inklusive einige Spezialzeichen und die Löschtaste) zu den Bedienungselementen L1, L2, L3, L4, R1, R2, R3, R4 dargestellt.

In der Vorrichtung 1, respektive im Erweiterungsmodul 2, können mehrere solche Tabellen mit verschiedenen Zeichensätzen gespeichert sein. Ein bestimmter Zeichensatz wird vom Benutzer mittels des Selektionselements 13 ausgewählt und mittels Tastendruck aktiviert. Das Selektionselement ist als Wählrad (ein so genanntes "Scrolling Wheel") oder Rollkugel (ein so genannter "Track Ball") ausgeführt. Beim Einschalten der Vorrichtung 1, 1' wird vorzugsweise ein bevorzugter Zeichensatz ausgewählt und aktiviert:

Die Vorrichtung 1, respektive das Erweiterungsmodul 2, umfasst ein Steuermodul 14, das den Auswahlprozess der Zeichensätze steuert und die Betätigung der Bedienungselemente L1, L2, L3, L4, R1, R2, R3, R4 durch den Benutzer verarbeitet. Das Steuermodul 14 steuert zudem die optischen Anzeigeelemente L11, L22, L33, L44, R11, R22, R33, R44 mit den Zeichen des gewählten aktiven Zeichensatzes an. Das Steuermodul 14 ist vorzugsweise ein programmiertes Softwaremodul, das auf einem Prozessor der Vorrichtung 1, respektive des Erweiterungsmoduls 2, ausgeführt wird. Der Fachmann wird verstehen, dass das Steuermodul 14 auch hardwaremässig oder als Kombination von Hardware- und Softwarekomponenten ausgeführt werden kann.

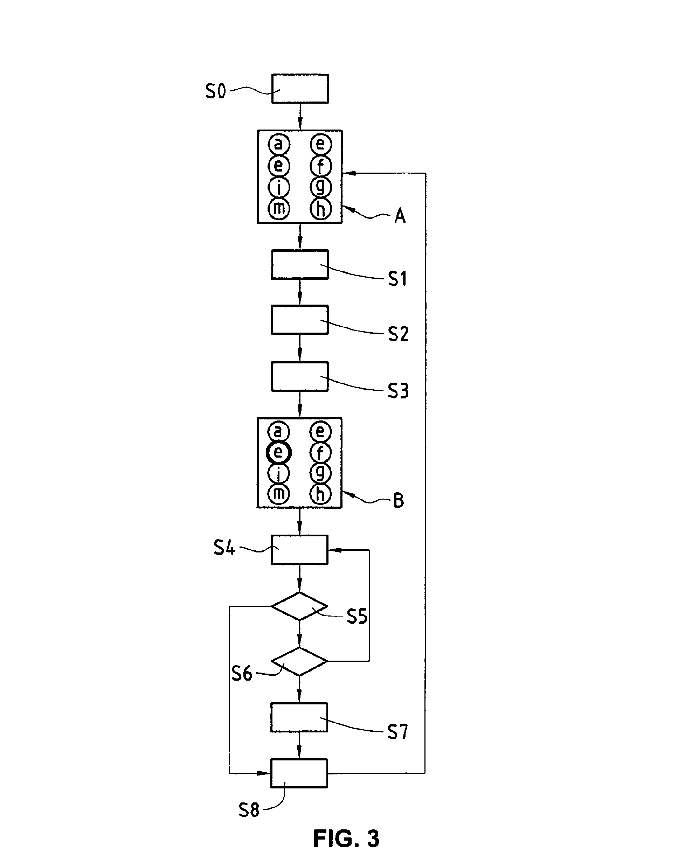

In den folgenden Abschnitten wird mit Bezug auf die Figur 3 der Verfahrensablauf bei der Dateneingabe an einem Beispiel beschrieben, in welchem das Zeichen "g" eingegeben werden soll.

Im Schritt S0, der beispielsweise automatisch beim Einschalten der Vorrichtung 1, 1' ausgeführt wird, wird in der Vorrichtung 1, respektive im Erweiterungsmodul 2, der in Tabelle 1 dargestellte Zeichensatz gewählt und aktiviert.

In der Figur 3 wird mit dem Bezugszeichen A die Ausgangslage bezeichnet, die sich dem Benutzer auf den optischen Anzeigelementen L11, L22, L33, L44, R11, R22, R33, R44 präsentiert, bevor er die Bedienungselemente L1, L2, L3, L4, R1, R2, R3, R4 betätigt. Diese Ausgangslage ist auch in der Figur 2 dargestellt. In der Ausgangslage A werden die optischen Anzeigelemente L11, L22, L33, L44, R11, R22, R33, R44 jeweils mit dem ersten Zeichen der Zeichengruppe angesteuert, die dem dem betreffenden Anzeigelement L11, L22, L33, L44, R11, R22, R33, R44 zugeordneten Bedienungselement L1, L2, L3, L4, R1, R2, R3, R4 zugewiesen ist. In einer alternativen Ausführungsvariante werden für die Bedienungselemente L1, L2, L3, L4, R1, R2, R3, R4 jeweils sämtliche Zeichen der betreffenden Zeichengruppe dargestellt.

Im Schritt S1 betätigt der Benutzer ein erstes Bedienungselement L1, L2, L3, L4, R1, R2, R3, R4 auf dem Griff 11L oder 11R, um eine der in der Tabelle 1 dargestellten Zeichengruppen auszuwählen. Im vorliegenden Beispiel betätigt der Benutzer das auf dem Griff 11 L angebrachte Bedienungselement L2, dem das Anzeigeelement L22 mit dem dargestellten Zeichen "e" (respektive mit der dargestellten Zeichengruppe { e f g h }) zugeordnet ist.

Im Schritt S2 nimmt das Steuermodul 14 die Elementidentifizierung des im Schritt S1 betätigten Bedienungselements entgegen und bestimmt die Zeichengruppe, die in der Tabelle 1 diesem Bedienungselement zugeordnet ist. Im vorliegenden Beispiel nimmt das Steuermodul 14 die Elementidentifizierung des im Schritt S1 betätigten Bedienungselements L2 entgegen und bestimmt die Zeichengruppe { e f g h }, die in der Tabelle 1 dem Bedienungselement L2 zugeordnet ist.

Im Schritt S3 bestimmt das Steuermodul 14, auf welchem Griff 11L, 11R das Bedienungselement L1, L2, L3, L4, R1, R2, R3, R4 im Schritt S1 betätigt wurde und ordnet den auf dem anderen Griff 11 R, 11L angebrachten Bedienungselementen R1, R2, R3, R4 oder L1, L2, L3, L4 temporär die Zeichen aus der im Schritt S2 bestimmten Zeichengruppe zu. Zudem steuert das Steuermodul 14 die entsprechenden Anzeigelemente R11, R22, R33, R44 oder L11, L22, L33, L44 mit diesen Zeichen an. Im vorliegenden Beispiel wurde im Schritt S1 das Bedienungselement L2 auf dem Griff 11L betätigt, so dass das Steuermodul 14 den auf dem anderen Griff 11R angebrachten Bedienungselementen R1, R2, R3 und R4 temporär die Zeichen "e", "f', "g" respektive "h" aus der im Schritt S2 bestimmten Zeichengruppe zuordnet und die entsprechenden Anzeigelemente R11, R22, R33 und R44 mit den Zeichen "e", "f", "g" respektive "h" ansteuert.

In der Figur 3 wird mit dem Bezugszeichen B die Ansicht bezeichnet, die sich dem Benutzer auf den optischen Anzeigelementen L11, L22, L33, L44, R11, R22, R33, R44 präsentiert, nachdem er im Schritt S1 das Bedienungselement L2 betätigt hat und das Steuermodul 14 die Schritte S2 und S3 ausgeführt hat. Der Benutzer hat nun die Möglichkeit, eines der Bedienungselemente R1, R2, R3 oder R4 zu betätigen, um das Zeichen "e", "f", "g" oder "h" zu wählen. Wie in der Figur 3 dargestellt ist, wird zudem das betätigte Bedienungselement L2 optisch hervorgehoben.

Im Schritt S4 betätigt der Benutzer das zweite Bedienungselement L1, L2, L3, L4, R1, R2, R3, R4, um ein Zeichen aus der im Schritt S1 bestimmten Zeichengruppen auszuwählen. Im vorliegenden Beispiel betätigt der Benutzer das Bedienungselement R3, dem das Anzeigeelement R33 mit dem dargestellten Zeichen "g" zugeordnet ist.

Im Schritt S5 nimmt das Steuermodul 14 die Elementidentifizierung des im Schritt S4 betätigten Bedienungselements (im vorliegenden Beispiel R3) entgegen und überprüft, ob die entgegengenommene Elementidentifizierung der Elementidentifizierung entspricht, die im Schritt S2 entgegengenommen wurde (im vorliegenden Beispiel L2). Falls dem so ist, fährt das Steuermodul 14 im Schritt S8 fort, wodurch die im Schritt S1 ausgeführte Betätigung des Bedienungselements annulliert wird, andernfalls fährt das Steuermodul im Schritt S6 fort (im vorliegenden Beispiel wurden zwei verschiedene Bedienungselemente L2 und R3 betätigt).

Im Schritt S6 überprüft das Steuermodul 14, (i) ob die im Schritt S5 entgegengenommene Elementidentifizierung einem Bedienungselement L1, L2, L3, L4, R1, R2, R3, R4 entspricht, das auf dem selben Griff 11 L oder 11 R angebracht ist, wie das Bedienungselement L1, L2, L3, L4 oder R1, R2, R3, R4, das im Schritt S2 betätigt wurde, oder (ii), ob die entgegengenommene Elementidentifizierung einem Bedienungselement R1, R2, R3, R4 oder L1, L2, L3, L4 entspricht, das auf dem anderen Griff 11 R oder 11 L angebracht ist. Zu diesem Zweck sind die Elementidentifizierungen jeweils einem der Griffe 11L, 11R zugeordnet, die Elementidentifizierungen enthalten beispielsweise eine Griffidentifizierung. Im ersten Fall (i) wird ein Alarmsignal erzeugt, beispielsweise in Form eines Signaltons, und dem Benutzer erneut die Gelegenheit gegeben, im Schritt S4 ein Bedienungselement auf dem Griff 11R respektive 11L zu betätigen. Im zweiten Fall (ii) fährt das Steuermodul 14 im Schritt S7 fort. Im vorliegenden Fall überprüft das Steuermodul 14, ob die im Schritt S5 entgegengenommene Elementidentifizierung einem Bedienungselement L1, L2, L3, L4 entspricht, das auf dem selben Griff 11L angebracht ist, wie das Bedienungselement L2, das im Schritt S2 betätigt wurde, oder ob die entgegengenommene Elementidentifizierung einem Bedienungselement R1, R2, R3, R4 entspricht, das auf dem anderen Griff 11 R angebracht ist. Im vorliegenden Beispiel wurden Bedienungselemente L2, R3 auf verschiedenen Griffen 11L, 11R betätigt.

Im Schritt S7 bestimmt das Steuermodul 14 entsprechend der im Schritt S5 entgegengenommenen Elementidentifizierung das Zeichen, das im Schritt S3 temporär dem Bedienungselement R3 zugeordnet wurde, als ausgewähltes Zeichen. Das ausgewählte Zeichen wird durch das Steuermodul 14, gegebenenfalls über das Schnittstellenmodul 21, zur Weiterverarbeitung an die herkömmlichen Module weitergeleitet, durch welche es beispielsweise auf der Anzeige 12 dargestellt wird. Falls den Bedienungselementen L1, L2, L3, L4, R1, R2, R3, R4 Steuerzeichen zugeordnet werden, können durch die herkömmlichen Module auch andere Funktionen ausgelöst werden. Im vorliegenden Beispiel bestimmt das Steuermodul 14 entsprechend der im Schritt S5 entgegengenommenen Elementidentifizierung das Zeichen "g", das im Schritt S3 temporär dem Bedienungselement R3 zugeordnet wurde, als ausgewähltes Zeichen.

Im Schritt S8 ordnet das Steuermodul 14 den Bedienungselementen L1, L2, L3, L4, R1, R2, R3, R4 wieder die ursprünglichen Zeichengruppen des in der Tabelle 1 dargestellten Zeichensatzes zu und steuert die optischen Anzeigelemente L11, L22, L33, L44, R11, R22, R33, R44 wieder mit den entsprechenden Zeichen an. Dadurch werden die Bedienungselemente L1, L2, L3, L4, R1, R2, R3, R4 und die Anzeigelemente L11, L22, L33, L44, R11, R22, R33, R44 wieder in die Ausgangslage A zurückgesetzt und der Benutzer kann erneut eine Dateneingabe durchführen.

An dieser Stelle soll angeführt werden, dass das oben beschriebene Verfahren zur Dateneingabe und das Steuermodul 14 auch für Vorrichtungen, respektive Erweiterungsmodule, verwendbar sind, deren Bedienungselemente L1, L2, L3, L4, R1, R2, R3, R4 wie die zugeordneten Anzeigelemente L11, L22, L33, L44, R11, R22, R33, R44 auf der Anzeigeseite 10 angebracht und beispielsweise vom Benutzer durch die Daumen T betätigbar sind.

## Patentansprüche

1. Mobile tragbare elektronische Vorrichtung (1), umfassend:
- eine auf einer Anzeigeseite (10) der Vorrichtung (1) angebrachte Anzeige (12),
- Bedienungselemente (L1, L2, L3, L4, R1, R2, R3, R4) für die manuelle Dateneingabe durch einen Benutzer, welche auf einer von der Anzeigeseite (10) abgewandten Rückseite der Vorrichtung (1) angeordnet sind,
**dadurch gekennzeichnet,**
**dass** die Vorrichtung (1) mit zwei Griffen (11L, 11R) versehen ist, die entlang den beiden seitlich zur vertikalen Achse (Z) der Anzeige (12) verlaufenden Längsseiten (16L, 16R) der Vorrichtung (1) angeordnet sind, und
**dass** die Bedienungselemente (L1, L2, L3, L4, R1, R2, R3, R4) so auf der von der Anzeigeseite (10) abgewandten Rückseite (17L, 17R) der Griffe (11 L, 11R) angeordnet sind, dass im Zustand, in welchem die Griffe (11 L, 11 R) durch den Benutzer jeweils zwischen dem Daumen (T) und den anderen Fingern (F) einer Hand gehalten werden, diese anderen Finger (F) jeweils auf eines der Bedienungselemente (L1, L2, L3, L4, R1, R2, R3, R4) zu liegen kommen und die Bedienungselemente (L1, L2, L3, L4, R1, R2, R3, R4) jeweils durch den daraufliegenden Finger (F) betätigbar sind.

2. Vorrichtung (1) nach Anspruch 1, **dadurch gekennzeichnet, dass** sie zusätzlich zur Anzeige (12) weitere optische Anzeigeelemente (L11, L22, L33, L44, R11, R22, R33, R44) zur Darstellung von Zeichen umfasst, welche jeweils einem der Bedienungselemente (L1, L2, L3, L4, R1, R2, R3, R4) zugeordnet auf der Anzeigeseite (10) angebracht sind.

3. Vorrichtung (1) nach einem der Ansprüche 1 oder 2, **dadurch gekennzeichnet, dass** die Griffe (11L, 11R) aus transparentem Material gefertigt sind, so dass die zur Betätigung der Bedienungselemente (L1, L2, L3, L4, R1, R2, R3, R4) verwendeten Finger (F) des Benutzers für den Benutzer von der Anzeigeseite (10) her durch die Griffe (11L, 11R) hindurch sichtbar sind.

4. Vorrichtung (1) nach einem der Ansprüche 1 bis 3, **dadurch gekennzeichnet, dass** sie Mittel umfasst, zum Zuweisen von Zeichen zu Bedienungselementen (L1, L2, L3, L4, R1, R2, R3, R4) und zum Ansteuern der optischen Anzeigeelemente (L11, L22, L33, L44, R11, R22, R33, R44) mit jeweils demjenigen Zeichen, das dem dem betreffenden Anzeigelement (L11, L22, L33, L44, R11, R22, R33, R44) zugeordneten Bedienungselement (L1, L2, L3, L4, R1, R2, R3, R4) zugewiesen ist.

5. Vorrichtung (1) nach Anspruch 4, **dadurch gekennzeichnet, dass** die genannten Mittel so beschaffen sind, dass sie einem der Bedienungselemente (L1, L2, L3, L4, R1, R2, R3, R4) ein Zeichen in Abhängigkeit von der Betätigung eines anderen der Bedienungselemente (L1, L2, L3, L4, R1, R2, R3, R4) zuweisen.

6. Vorrichtung (1) nach einem der Ansprüche 4 oder 5, **dadurch gekennzeichnet, dass** sie ein auf der Anzeigeseite (10) angebrachtes, durch die Daumen (T) betätigbares Selektionselement (13) umfasst, und dass die genannten Mittel so beschaffen sind, dass sie den Bedienungselementen (L1, L2, L3, L4, R1, R2, R3, R4) Zeichen in Abhängigkeit von der Betätigung des Selektionselements (13) zuweisen.

7. Vorrichtung (1) nach einem der Ansprüche 1 bis 6, **dadurch gekennzeichnet, dass** sie weitere Mittel umfasst, zum Bestimmen einer Zeichengruppe, die einem ersten betätigten Bedienungselement (L2) zugewiesen ist, zum Bestimmen einer Elementidentifizierung eines betätigten zweiten Bedienungselements (R1, R2, R3, R4), und zum Bestimmen eines Zeichens aus der bestimmten Zeichengruppe, basierend auf der Elementidentifizierung des betätigten zweiten Bedienungselements (R1, R2, R3, R4).

8. Vorrichtung (1) nach Anspruch 7, **dadurch gekennzeichnet, dass** die genannten weiteren Mittel so beschaffen sind, dass das Zeichen nur aus der bestimmten Zeichengruppe bestimmt wird, wenn das betätigte erste Bedienungsetement (L2) und das betätigte zweite Bedienungselement (R1, R2, R3, R4) auf verschiedenen Griffen (11 L, 11 R) angeordnet sind.

9. Vorrichtung (1) nach einem der Ansprüche 1 bis 8, **dadurch gekennzeichnet, dass** die Griffe (11L, 11R) als Platten ausgestaltet sind, die zwischen einem an den Längsseiten (16L, 16R) der Vorrichtung (1) anliegenden Zustand, in welchem die Bedienungselemente (L1, L2, L3, L4, R1, R2, R3, R4) nicht betätigbar sind, und einem für die Betätigung der Bedienungselemente (L1, L2, L3, L4, R1, R2, R3, R4) vorgesehenen, vorstehenden Zustand bewegbar sind.

10. Vorrichtung (1) nach einem der Ansprüche 1 bis 9, **dadurch gekennzeichnet, dass** jeweils vier Bedienungselemente (L1, L2, L3, L4, R1, R2, R3, R4) auf der Rückseite (17L, 17R) eines Griffs (11L, 11R) angeordnet sind, dass die Bedienungselemente (L1, L2, L3, L4, R1, R2, R3, R4) als Berührungssensoren, Drucksensoren oder Druckschalter ausgeführt sind, dass die optischen Anzeigeelemente (L11, L22, L33, L44, R11, R22, R33, R44) jeweils im Bereich über dem Bedienungselement (L1, L2, L3, L4, R1, R2, R3, R4), dem sie zugeordnet sind, auf der Anzeigeseite (10) der Griffe (11L, 11R) angebracht sind, dass die optischen Anzeigeelemente (L11, L22, L33, L44, R11, R22, R33, R44) als LCD- oder LED-Anzeigen ausgeführt sind, und dass die Vorrichtung (1) als Mobilfunktelefon, als PDA-Computer und/oder als computerisierte Spielvorrichtung ausgeführt ist.

11. Erweiterungsmodul (2) zur entfernbaren Verbindung mit einer mobilen tragbaren elektronischen Vorrichtung (1'), die eine auf einer Anzeigeseite (10) der Vorrichtung (1') angebrachte Anzeige (12) umfasst, **dadurch gekennzeichnet,**
**dass** das Erweiterungsmodul (2) Bedienungselemente (L1, L2, L3, L4, R1, R2, R3, R4) für die manuelle Dateneingabe durch einen Benutzer umfasst, welche im mit der mobilen tragbaren elektronischen Vorrichtung (1') verbundenen Zustand auf einer von der Anzeigeseite (10) abgewandten Rückseite des Erweiterungsmoduls (2) angeordnet sind,
**dass** das Erweiterungsmodul (2) mit zwei Griffen (11L, 11R) versehen ist, die im mit der mobilen tragbaren elektronischen Vorrichtung (1') verbundenen Zustand entlang den beiden seitlich zur vertikalen Achse (Z) der Anzeige (12) verlaufenden Längsseiten (16L, 16R) der Vorrichtung (1') angeordnet sind, und
**dass** die Bedienungselemente (L1, L2, L3, L4, R1, R2, R3, R4) so auf der von der Anzeigeseite (10) abgewandten Rückseite (17L, 17R) der Griffe (11 L, 11 R) angeordnet sind, dass im Zustand, in welchem die Griffe (11 L, 11 R) durch den Benutzer jeweils zwischen dem Daumen (T) und den anderen Fingern (F) einer Hand gehalten werden, diese anderen Finger (F) jeweils auf eines der Bedienungselemente (L1, L2, L3, L4, R1, R2, R3, R4) zu liegen kommen und die Bedienungselemente (L1, L2, L3, L4, R1, R2, R3, R4) jeweils durch den daraufliegenden Finger (F) betätigbar sind.

12. Erweiterungsmodul (2) nach Anspruch 11, **dadurch gekennzeichnet, dass** es optische Anzeigeelemente (L11, L22, L33, L44, R11, R22, R33, R44) zur Darstellung von Zeichen umfasst, welche jeweils einem der Bedienungselemente (L1, L2, L3, L4, R1, R2, R3, R4) zugeordnet im mit der mobilen tragbaren elektronischen Vorrichtung (1') verbundenen Zustand auf der Anzeigeseite (10) angebracht sind.

13. Erweiterungsmodul (2) nach einem der Ansprüche 11 oder 12, **dadurch gekennzeichnet, dass** die Griffe (11L, 11R) aus transparentem Material gefertigt sind, so dass die zur Betätigung der Bedienungselemente (L1, L2, L3, L4, R1, R2, R3, R4) verwendeten Finger (F) des Benutzers für den Benutzer im mit der mobilen tragbaren elektronischen Vorrichtung (1') verbundenen Zustand von der Anzeigeseite (10) her durch die Griffe (11L, 11R) hindurch sichtbar sind.

14. Erweiterungsmodul (2) nach einem der Ansprüche 11 bis 13, **dadurch gekennzeichnet, dass** es Mittel umfasst zum Zuweisen von Zeichen zu Bedienungselementen (L1, L2, L3, L4, R1, R2, R3, R4) und zum Ansteuern der optischen Anzeigeelemente (L11, L22, L33, L44, R11, R22, R33, R44) mit jeweils demjenigen Zeichen, das dem dem betreffenden Anzeigelement (L11, L22, L33, L44, R11, R22, R33, R44) zugeordneten Bedienungselement (L1, L2, L3, L4, R1, R2, R3, R4) zugewiesen ist.

15. Erweiterungsmodul (2) nach Anspruch 14, **dadurch gekennzeichnet, dass** die genannten Mittel so beschaffen sind, dass sie einem der Bedienungselemente (L1, L2, L3, L4, R1, R2, R3, R4) ein Zeichen in Abhängigkeit von der Betätigung eines anderen der Bedienungselemente (L1, L2, L3, L4, R1, R2, R3, R4) zuweisen.

16. Erweiterungsmodul (2) nach einem der Ansprüche 14 oder 15, **dadurch gekennzeichnet, dass** es ein im mit der mobilen tragbaren elektronischen Vorrichtung (1') verbundenen Zustand auf der Anzeigeseite (10) angebrachtes, durch die Daumen (T) betätigbares Selektionselement (13) umfasst, und dass die genannten Mittel so beschaffen sind, dass sie den Bedienungselementen (L1, L2, L3, L4, R1, R2, R3, R4) Zeichen in Abhängigkeit von der Betätigung des Selektionselements (13) zuweisen.

17. Erweiterungsmodul (2) nach einem der Ansprüche 11 bis 16, **dadurch gekennzeichnet, dass** es weitere Mittel umfasst, zum Bestimmen einer Zeichengruppe, die einem ersten betätigten Bedienungselement (L2) zugewiesen ist, zum Bestimmen einer Elementidentifizierung eines betätigten zweiten Bedienungselements (R1, R2, R3, R4), und zum Bestimmen eines Zeichens aus der bestimmten Zeichengruppe, basierend auf der Elementidentifizierung des betätigten zweiten Bedienungselements (R1, R2, R3, R4).

18. Erweiterungsmodul (2) nach Anspruch 17, **dadurch gekennzeichnet, dass** die genannten weiteren Mittel so beschaffen sind, dass das Zeichen nur aus der bestimmten Zeichengruppe bestimmt wird, wenn das betätigte erste Bedienungselement (L2) und das betätigte zweite Bedienungselement (R1, R2, R3, R4) auf verschiedenen Griffen (11L, 11R) angeordnet sind.

19. Erweiterungsmodul (2) nach einem der Ansprüche 11 bis 18, **dadurch gekennzeichnet, dass** jeweils vier Bedienungselemente (L1, L2, L3, L4, R1, R2, R3, R4) auf der Rückseite (17L, 17R) eines Griffs (11L, 11R) angeordnet sind, dass die Bedienungselemente (L1, L2, L3, L4, R1, R2, R3, R4) als Berührungssensoren, Drucksensoren oder Druckschalter ausgeführt sind, dass die optischen Anzeigeelemente (L11, L22, L33, L44, R11, R22, R33, R44) jeweils im Bereich über dem Bedienungselement (L1, L2, L3, L4, R1, R2, R3, R4), dem sie zugeordnet sind, auf der Anzeigeseite (10) der Griffe (11L, 11R) 5 angebracht sind, und dass die optischen Anzeigeelemente (L11, L22, L33, L44, R11, R22, R33, R44) als LCD- oder LED-Anzeigen ausgeführt sind.

## Geänderte Patentansprüche

### Geänderte Patentansprüche gemäss Regel 86(2) EPÜ.

**1.** Mobile tragbare elektronische Vorrichtung (1), umfassend:
- eine auf einer Anzeigeseite (10) der Vorrichtung (1) angebrachte Anzeige (12),
- zwei Griffe (11L, 11R), die entlang den beiden seitlich zur vertikalen Achse (Z) der Anzeige (12) verlaufenden Längsseiten (16L, 16R) der Vorrichtung (1) angeordnet sind, und
- Bedienungselemente (L1, L2, L3, L4, R1, R2, R3, R4) für die manuelle Dateneingabe durch einen Benutzer, welche so auf einer von der Anzeigeseite (10) abgewandten Rückseite (17L, 17R) der Griffe (11L, 11R) angeordnet sind, dass im Zustand, in welchem die Griffe (11 L, 11R) durch den Benutzer jeweils zwischen dem Daumen (T) und den anderen Fingern (F) einer Hand gehalten werden, diese anderen Finger (F) jeweils auf eines der Bedienungselemente (L1, L2, L3, L4, R1, R2, R3, R4) zu liegen kommen und die Bedienungselemente (L1, L2, L3, L4, R1, R2, R3, R4) jeweils durch den daraufliegenden Finger (F) betätigbar sind,
**dadurch gekennzeichnet,**
**dass** die Vorrichtung (1) zusätzlich zur Anzeige (12) weitere optische Anzeigeelemente (L11, L22, L33, L44, R11, R22, R33, R44) zur Darstellung von Zeichen umfasst, welche jeweils einem der Bedienungselemente (L1, L2, L3, L4, R1, R2, R3, R4) zugeordnet auf der Anzeigeseite (10) angebracht sind.

**2.** Vorrichtung (1) nach Anspruch 1, **dadurch gekennzeichnet, dass** die Griffe (11L, 11R) aus transparentem Material gefertigt sind, so dass die zur Betätigung der Bedienungselemente (L1, L2, L3, L4, R1, R2, R3, R4) verwendeten Finger (F) des Benutzers für den Benutzer von der Anzeigeseite (10) her durch die Griffe (11L, 11R) hindurch sichtbar sind.

**3.** Vorrichtung (1) nach einem der Ansprüche 1 oder 2, **dadurch gekennzeichnet, dass** sie Mittel umfasst, zum Zuweisen von Zeichen zu Bedienungselementen (L1, L2, L3, L4, R1, R2, R3, R4) und zum Ansteuern der optischen Anzeigeelemente (L11, L22, L33, L44, R11, R22, R33, R44) mit jeweils demjenigen Zeichen, das dem dem betreffenden Anzeigelement (L11, L22, L33, L44, R11, R22, R33, R44) zugeordneten Bedienungselement (L1, L2, L3, L4, R1, R2, R3, R4) zugewiesen ist.

**4.** Vorrichtung (1) nach Anspruch 3, **dadurch gekennzeichnet, dass** die genannten Mittel so beschaffen sind, dass sie einem der Bedienungselemente (L1, L2, L3, L4, R1, R2, R3, R4) ein Zeichen in Abhängigkeit von der Betätigung eines anderen der Bedienungselemente (L1, L2, L3, L4, R1, R2, R3, R4) zuweisen.

**5.** Vorrichtung (1) nach einem der Ansprüche 3 oder 4, **dadurch gekennzeichnet, dass** sie ein auf der Anzeigeseite (10) angebrachtes, durch die Daumen (T) betätigbares Selektionselement (13) umfasst, und dass die genannten Mittel so beschaffen sind, dass sie den Bedienungselementen (L1, L2, L3, L4, R1, R2, R3, R4) Zeichen in Abhängigkeit von der Betätigung des Selektionselements (13) zuweisen.

**6.** Vorrichtung (1) nach einem der Ansprüche 1 bis 5, **dadurch gekennzeichnet, dass** sie weitere Mittel umfasst, zum Bestimmen einer Zeichengruppe, die einem ersten betätigten Bedienungselement (L2) zugewiesen ist, zum Bestimmen einer Elementidentifizierung eines betätigten zweiten Bedienungselements (R1, R2, R3, R4), und zum Bestimmen eines Zeichens aus der bestimmten Zeichengruppe, basierend auf der Elementidentifizierung des betätigten zweiten Bedienungselements (R1, R2, R3, R4).

**7.** Vorrichtung (1) nach Anspruch 6, **dadurch gekennzeichnet, dass** die genannten weiteren Mittel so beschaffen sind, dass das Zeichen nur aus der bestimmten Zeichengruppe bestimmt wird, wenn das betätigte erste Bedienungselement (L2) und das betätigte zweite Bedienungselement (R1, R2, R3, R4) auf verschiedenen Griffen (11L, 11R) angeordnet sind.

**8.** Vorrichtung (1) nach einem der Ansprüche 1 bis 7, **dadurch gekennzeichnet, dass** die Griffe (11 L, 11R) als Platten ausgestaltet sind, die zwischen einem an den Längsseiten (16L, 16R) der Vorrichtung (1) anliegenden Zustand, in welchem die Bedienungselemente (L1, L2, L3, L4, R1, R2, R3, R4) nicht betätigbar sind, und einem für die Betätigung der Bedienungselemente (L1, L2, L3, L4, R1, R2, R3, R4) vorgesehenen, vorstehenden Zustand bewegbar sind.

**9.** Vorrichtung (1) nach einem der Ansprüche 1 bis 8, **dadurch gekennzeichnet, dass** jeweils vier Bedienungselemente (L1, L2, L3, L4, R1, R2, R3, R4) auf der Rückseite (17L, 17R) eines Griffs (11L, 11R) angeordnet sind, dass die Bedienungselemente (L1, L2, L3, L4, R1, R2, R3, R4) als Berührungssensoren, Drucksensoren oder Druckschalter ausgeführt sind, dass die optischen Anzeigeelemente (L11, L22, L33, L44, R11, R22, R33, R44) jeweils im Bereich über dem Bedienungselement (L1, L2, L3, L4, R1, R2, R3, R4), dem sie zugeordnet sind, auf der Anzeigeseite (10) der Griffe (11L, 11R) angebracht sind, dass die optischen Anzeigeelemente (L11, L22, L33, L44, R11, R22, R33, R44) als LCD- oder LED-Anzeigen ausgeführt sind, und dass die Vorrichtung (1) als Mobilfunktelefon, als PDA-Computer und/oder als computerisierte Spielvorrichtung ausgeführt ist.

**10.** Erweiterungsmodul (2) zur entfernbaren Verbindung mit einer mobilen tragbaren elektronischen Vorrichtung (1'), die eine auf einer Anzeigeseite (10) der Vorrichtung (1') angebrachte Anzeige (12) umfasst,
welches Erweiterungsmodul (2) mit zwei Griffen (11L, 11R) versehen ist, die im mit der mobilen tragbaren elektronischen Vorrichtung (1') verbundenen Zustand entlang den beiden seitlich zur vertikalen Achse (Z) der Anzeige (12) verlaufenden Längsseiten (16L, 16R) der Vorrichtung (1') angeordnet sind, und
welches Erweiterungsmodul (2) Bedienungselemente (L1, L2, L3, L4, R1, R2, R3, R4) für die manuelle Dateneingabe durch einen Benutzer umfasst, welche im mit der mobilen tragbaren elektronischen Vorrichtung (1') verbundenen Zustand so auf einer von der Anzeigeseite (10) abgewandten Rückseite (17L, 17R) der Griffe (11L, 11R) angeordnet sind, dass im Zustand, in welchem die Griffe (11L, 11R) durch den Benutzer jeweils zwischen dem Daumen (T) und den anderen Fingern (F) einer Hand gehalten werden, diese anderen Finger (F) jeweils auf eines der Bedienungselemente (L1, L2, L3, L4, R1, R2, R3, R4) zu liegen kommen und die Bedienungselemente (L1, L2, L3, L4, R1, R2, R3, R4) jeweils durch den daraufliegenden Finger (F) betätigbar sind,
**dadurch gekennzeichnet,**
**dass** das Erweiterungsmodul (2) optische Anzeigeelemente (L11, L22, L33, L44, R11, R22, R33, R44) zur Darstellung von Zeichen umfasst, welche jeweils einem der Bedienungselemente (L1, L2, L3, L4, R1, R2, R3, R4) zugeordnet im mit der mobilen tragbaren elektronischen Vorrichtung (1') verbundenen Zustand auf der Anzeigeseite (10) angebracht sind.

**11.** Erweiterungsmodul (2) nach Anspruch 10, **dadurch gekennzeichnet, dass** die Griffe (11L, 11R) aus transparentem Material gefertigt sind, so dass die zur Betätigung der Bedienungselemente (L1, L2, L3, L4, R1, R2, R3, R4) verwendeten Finger (F) des Benutzers für den Benutzer Im mit der mobilen tragbaren elektronischen Vorrichtung (1') verbundenen Zustand von der Anzeigeseite (10) her durch die Griffe (11L, 11R) hindurch sichtbar sind.

**12.** Erweiterungsmodul (2) nach einem der Ansprüche 10 oder 11, **dadurch gekennzeichnet, dass** es Mittel umfasst zum Zuweisen von Zeichen zu Bedienungselementen (L1, L2, L3, L4, R1, R2, R3, R4) und zum Ansteuern der optischen Anzeigeelemente (L11, L22, L33, L44, R11, R22, R33, R44) mit jeweils demjenigen Zeichen, das dem dem betreffenden Anzeigelement (L11, L22, L33, L44, R11, R22, R33, R44) zugeordneten Bedienungselement (L1, L2, L3, L4, R1, R2, R3, R4) zugewiesen ist.

**13.** Erweiterungsmodul (2) nach Anspruch 12, **dadurch gekennzeichnet, dass** die genannten Mittel so beschaffen sind, dass sie einem der Bedienungselemente (L1, L2, L3, L4, R1, R2, R3, R4) ein Zeichen in Abhängigkeit von der Betätigung eines anderen der Bedienungselemente (L1, L2, L3, L4, R1, R2, R3, R4) zuweisen.

**14.** Erweiterungsmodul (2) nach einem der Ansprüche 12 oder 13, **dadurch gekennzeichnet, dass** es ein im mit der mobilen tragbaren elektronischen Vorrichtung (1') verbundenen Zustand auf der Anzeigeseite (10) angebrachtes, durch die Daumen (T) betätigbares Selektionselement (13) umfasst, und dass die genannten Mittel so beschaffen sind, dass sie den Bedienungselementen (L1, L2, L3, L4, R1, R2, R3, R4) Zeichen in Abhängigkeit von der Betätigung des Selektionselements (13) zuweisen.

**15.** Erweiterungsmodul (2) nach einem der Ansprüche 10 bis 14, **dadurch gekennzeichnet, dass** es weitere Mittel umfasst, zum Bestimmen einer Zeichengruppe, die einem ersten betätigten Bedienungselement (L2) zugewiesen ist, zum Bestimmen einer Elementidentifizierung eines betätigten zweiten Bedienungselements (R1, R2, R3, R4), und zum Bestimmen eines Zeichens aus der bestimmten Zeichengruppe, basierend auf der Elementidentifizierung des betätigten zweiten Bedienungselements (R1, R2, R3, R4).

**16.** Erweiterungsmodul (2) nach Anspruch 15, **dadurch gekennzeichnet, dass** die genannten weiteren Mittel so beschaffen sind, dass das Zeichen nur aus der bestimmten Zeichengruppe bestimmt wird, wenn das betätigte erste Bedienungselement (L2) und das betätigte zweite Bedienungselement (R1, R2, R3, R4) auf verschiedenen Griffen (11L, 11R) angeordnet sind.

**17.** Erweiterungsmodul (2) nach einem der Ansprüche 10 bis 16, **dadurch gekennzeichnet, dass** jeweils vier Bedienungselemente (L1, L2, L3, L4, R1, R2, R3, R4) auf der Rückseite (17L, 17R) eines Griffs (11L, 11R) angeordnet sind, dass die Bedienungselemente (L1, L2, L3, L4, R1, R2, R3, R4) als Berührungssensoren, Drucksensoren oder Druckschalter ausgeführt sind, dass die optischen Anzeigeelemente (L11, L22, L33, L44, R11, R22, R33, R44) jeweils im Bereich über dem Bedienungselement (L1, L2, L3, L4, R1, R2, R3, R4), dem sie zugeordnet sind, auf der Anzeigeseite (10) der Griffe (11L, 11R) angebracht sind, und dass die optischen Anzeigeelemente (L11, L22, L33, L44, R11, R22, R33, R44) als LCD- oder LED-Anzeigen ausgeführt sind.
